# EUROPÄISCHE PATENTSCHRIFT

(11) **EP 3 065 995 B1**
(45) Veröffentlichungstag und Bekanntmachung des Hinweises auf die Patenterteilung: **28.02.2018**
(21) Anmeldenummer: 15700361.7
(22) Anmeldetag: 09.01.2015
(51) Int. Cl.: B61F 5/30, B23B 5/32

(54) **RADSATZ FÜR EIN SCHIENENFAHRZEUG**
WHEELSET FOR A RAIL VEHICLE
ESSIEU POUR VÉHICULE FERROVIAIRE

(30) Priorität: 17.01.2014 DE 102014200835
(43) Veröffentlichungstag der Anmeldung: 14.09.2016
(73) Patentinhaber: Siemens Aktiengesellschaft, 80333 München (DE)
(72) Erfinder: KROISS, Manuel, 85258 Ebersbach (DE); LÖFFLER, Gerd, A-8081 Empersdorf (AT)
(86) Internationale Anmeldenummer: PCT/EP2015/050321
(87) Internationale Veröffentlichungsnummer: WO 2015/107005

(56) Entgegenhaltungen:
- BE-A1- 822 544
- DE-A1- 2 805 407
- US-A- 4 674 370
- US-A- 5 611 284
- Publ.-Nr WL 07520 DA/98.5/08/02: "FAG Radsatzlager in der diesel- elektrischen Lokomotive "Herkules"", , 8. Juni 2007 (2007-06-08), XP055181438, Gefunden im Internet: URL:http://www.schaeffler.com/remotemedien /media/_shared_media/08_media_library/01_p ublications/schaeffler_2/publication/downl oads_18/wl_07520_de_de.pdf [gefunden am 2015-04-08] in der Anmeldung erwähnt

## Beschreibung

Die Erfindung bezieht sich auf einen Radsatz für ein Schienenfahrzeug, insbesondere für eine Lokomotive, nach dem Oberbegriff des Patentanspruches 1.

Ein Radsatz für ein Schienenfahrzeug, wie zum Beispiel eine Lokomotive oder ein Triebzug, umfasst zwei Schienenräder, die über eine in zwei Radsatzlagern gelagerte Radachse verbunden sind. Dabei weist jedes Radsatzlager ein gegossenes Lagergehäuse auf, welches bezüglich der Radachse von außen durch einen Gehäusedeckel und von innen durch einen Druckring verschlossen ist. Ferner ist im Bereich jedes Radsatzlagers eine Spannstelle angeordnet, an die Spannmittel einer Bearbeitungsmaschine zum Festspannen des Radsatzes während der Radsatzbearbeitung angreifen. Bei einer Bearbeitungsmaschine handelt es sich um eine Spezialdrehmaschine zur Reprofilierung der Radreifen von Schienenrädern oder zur Nacharbeitung von Wellen- und/oder Radbremsscheiben. Bearbeitungsmaschinen können unterflur in einer Fundamentgrube der Werkstatt fest installiert oder auf einem Werkstattgleis mobil unter ein aufgeständertes Schienenfahrzeug verfahrbar ausgebildet sein.

Aus der DE-Produktschrift "Mobiles Radsatzbearbeitungssystem Typ MOBITURN2: Das erste und einzige mobile Radsatzbearbeitungssystem der Welt", herausgegeben von Hegenscheidt-MFD GmbH & Co. KG unter der Publikationsnummer GP077 HM-PC 09.08, ist eine Bearbeitungsmaschine bekannt, welche per Bahn- oder Straßenbahntransport zu verschiedenen Einsatzorten verbracht und dort mittels eines Krans entladen oder beladen werden kann. Bei Bedarf kann die Bearbeitungsmaschine mit einem Verschiebefahrzeug auf dem Gleisnetz aus einer Warteposition an den jeweiligen Einsatzort verfahren werden, wo sie sich mittels eines eigenen Fahrantriebs unter den Radsätzen des aufgeständerten Schienenfahrzeugs selbst positioniert. Die Bearbeitungsmaschine umfasst eine integrierte Energiestation und Steuereinheit, die über Elektrokabel mittels Steckverbindung an das Energieversorgungssystem der Werkstatt angeschlossen wird. Während der Bearbeitung des Radsatzes ist das Schienenfahrzeug angehoben und in den Angriffspunkten der Hebeböcke gehalten, wodurch die Bearbeitungsmaschine selbst frei von Gewichtskräften des Schienenfahrzeugs bleibt. Zum Antrieb des Radsatzes wird das Reibrollenprinzip angewendet, wobei die erforderliche Reibungskraft zwischen Antriebsrolle und Radsatz durch einen geschlossenen Kräftezug zwischen dem Radsatz und der Bearbeitungsmaschine hergestellt wird. Hierzu zieht sich die Bearbeitungsmaschine mit einer Ankopplungseinrichtung zwischen Bearbeitungsmaschine und Lagergehäuse so an den Radsatz heran, dass eine optimale Reibungskraft zwischen Schienenrad und Antriebsrolle entsteht.

Zum Niederspannen des Radsatzes greifen Spannarme der Ankopplungseinrichtung in Spannstellen ein, die im Bereich der Radsatzlager angeordnet sind. So ist aus der DE-Produktschrift "FAG Radsatzlager in der dieselelektrischen Lokomotive Herkules", herausgegeben von FAG Kugelfischer Georg Schäfer AG unter der Publikationsnummer WL 07520 DA/98.5/08/02, ein Radsatzlager mit gegossenem Lagergehäuse bekannt. Das Lagergehäuse weist einen zylindrischen Gehäuseteil auf, in den die Radachse mündet und in Wälzlagern gelagert ist. An den zylindrischen Gehäuseteil sind zwei Auflageteller für die Primärfederung angeformt. Vom zylindrischen Gehäuseteil und von den Auflagetellern stehen zwei trapezförmig ausgebildete Stützstege parallel zueinander nach unten ab. Jeder Stützsteg weist zwei benachbarte Spannlaschen zur Aufnahme der Spannarme auf, wobei entsprechende Spannlaschen der beiden Stützstege einander fluchten.

Der Erfindung liegt die Aufgabe zugrunde, einen gattungsgemäßen Radsatz bereitzustellen, der ohne Funktionseinbußen in der Herstellung kostenoptimiert ist.

Die Aufgabe wird erfindungsgemäß gelöst durch einen Radsatz der eingangs genannten Art mit den im kennzeichnenden Teil des Patentanspruches 1 angegebenen Merkmalen.

Demnach umfasst ein Radsatz für ein Schienenfahrzeug, insbesondere für eine Lokomotive, zwei Schienenräder auf. Die Schienenräder sind über eine in zwei Radsatzlagern gelagerte Radachse verbunden. Jedes Radsatzlager weist ein gegossenes Lagergehäuse auf, welches durch einen äußeren Gehäusedeckel und einen inneren Druckring verschlossen ist. Jedes Radsatzlager weist außerdem eine Spannstelle zum Angreifen von Spannmitteln einer Bearbeitungsmaschine zur Bearbeitung des Radsatzes auf. Erfindungsgemäß ist die Spannstelle im Druckring des Radsatzlagers integriert. Hierdurch können die Spannstellen am Lagergehäuse entfallen, wodurch das Gussteil mit geringerem Volumen und einfacherer Geometrie ausgeführt werden kann. Hierdurch ist zunächst die Gießform günstiger herstellbar, vor allem aber werden Materialkosten für das gegossene Lagergehäuse eingespart. Ein weiterer Vorteil besteht in der mit dem Entfall angegossener Spannstellen einhergehenden Gewichtsreduktion des Lagergehäuses und damit des gesamten Radsatzes. Durch die Integration der Spannstellen in den Druckring, werden diese erfindungsgemäß in ein bestehendes und einfach zu modifizierendes Bauteil am Radsatzlager verschoben, welches durch Drehen und/oder Fräsen zugeschnitten werden kann.

In einer vorteilhaften Ausführungsform des erfindungsgemäßen Radsatzes ist die Spannstelle durch wenigstens eine an einem äußeren Umfang des Druckringes radial hervorstehende Spannlasche gebildet. Im montierten Zustand des Druckringes steht die Spannlasche nach unten ab. Die Spannlasche ist derart ausgebildet, dass Spannarme durch Formschluss eingreifen können; sie kann beispielsweise hakenförmig ausgebildet sein oder eine Öffnung aufweisen.

Vorzugsweise ist die Spannstelle des erfindungsgemäßen Radsatzes durch zwei am äußeren Umfang des Druckringes radial hervorstehende Spannlaschen gebildet, die diametral gegenüber liegend angeordnet sind. Hierdurch wird eine Unwucht bei drehender Bearbeitung des Druckringes vermieden. Ein derart gestalteter Druckring weist außerdem zwei gleichwertige Einbaupositionen auf, was seine Montage vereinfacht. Zudem kann bei Abnutzung oder Beschädigung einer der Spannlaschen durch um 180° verdrehten Einbau des Druckringes die andere der Spannlaschen verwendet werden, ohne dass ein neuer Druckring montiert werden muss.

In einer bevorzugten Ausgestaltung des erfindungsgemäßen Radsatzes weist eine Spannlasche mindestens ein Durchgangsloch zum Angreifen der Spannmittel auf. Die Spannlasche wird dabei durch die Spannkräfte der Spannarme nur auf Zug beansprucht. Beispielsweise kann die Spannlasche auch zwei Durchgangslöcher aufweisen, die etwa nebeneinander angeordnet sind.

In einer vorteilhaften Ausgestaltung des erfindungsgemäßen Radsatzes weist der Druckring eine ringförmige Schulter auf, die in einer ringförmigen Nut des Lagergehäuses sitzt, wobei über den Sitz der Schulter in der Nut Spannkräfte vom Druckring auf das Lagergehäuse übertragbar sind. Hierdurch wird vermieden, dass beispielsweise Schraubverbindungsmittel zwischen Druckring und Lagergehäuse beim Festspannen des Radsatzes auf Scherbelastung ausgesetzt sind.

Weitere Eigenschaften und Vorteile der Erfindung ergeben sich aus nachfolgender Beschreibung eines Ausführungsbeispiels anhand der Zeichnungen, in deren
- FIG 1: eine perspektivische Ansicht eines erfindungsgemäßen Radsatzes im Bereich des Radsatzlagers und
- FIG 2: der Radsatz nach FIG 1 in einer Unteransicht
schematisch veranschaulicht sind.

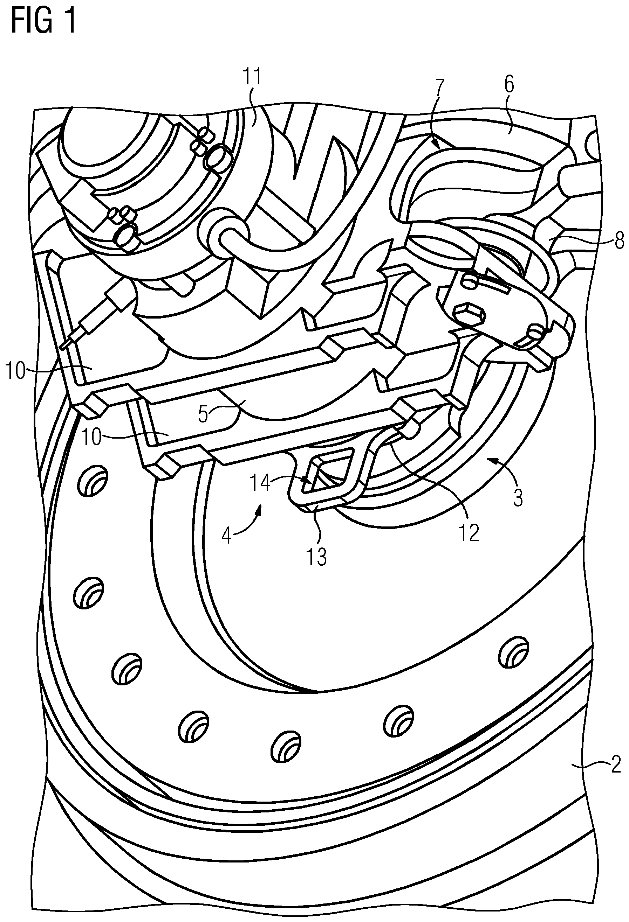

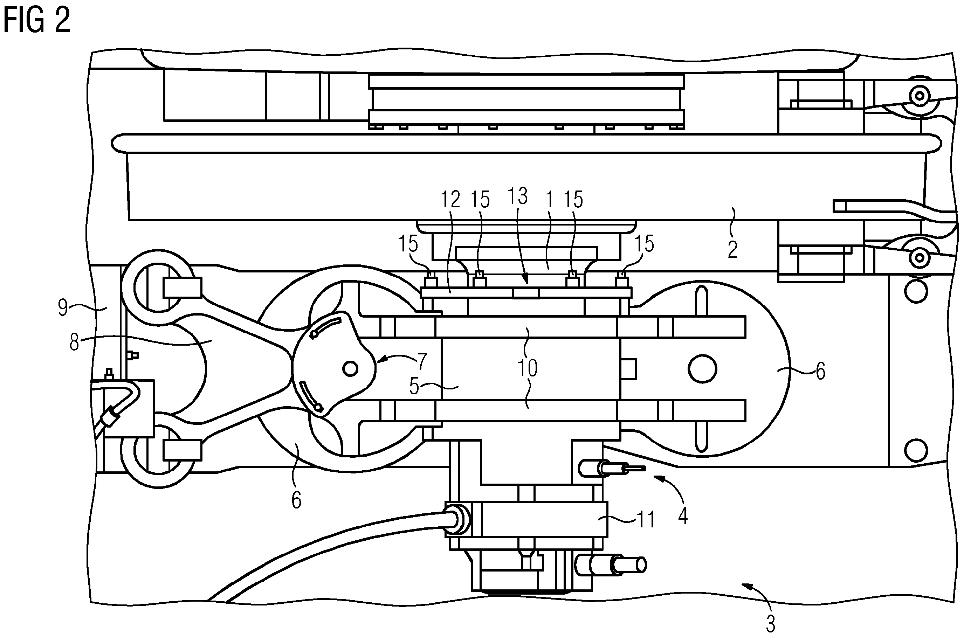

Gemäß FIG 1 und FIG 2 umfasst ein Radsatz für ein nicht dargestelltes Schienenfahrzeug, insbesondere für eine Lokomotive oder einen Triebzug, zwei über eine Radachse 1 verbundene Schienenräder 2. Die als Achswelle ausgebildete Radachse 1 ist an ihren beiden Enden in je einem Radsatzlager 3 gelagert. Ein Radsatzlager 3 weist ein nicht dargestelltes Wälzlager auf, das mit seinem Innenring auf der Radachse 1 sitzt und dessen Außenring in einem Lagergehäuse 4 sitzt. Das Lagergehäuse 4 ist als Gussteil mit komplexer Geometrie ausgeführt. Es weist einen Zylinderteil 5 auf, in den die Radachse 1 mündet. Ferner weist es zwei angegossene Auflageteller 6 als Sitz für die nicht dargestellten Primärfedern auf. Unterhalb eines der Auflageteller 6 weist das Lagergehäuse 4 eine angegossene Befestigungsstelle 7 für einen Dreieckslenker 8 auf, über den der Radsatz am Fahrwerksrahmen 9 angelenkt ist. Schließlich weist das Lagergehäuse 4 zwei angegossene Stützstege 10 auf, die trapezförmig ausgebildet sind und parallel vom Zylinderteil 5 sowie von den Auflagetellern 6 nach unten abstehen. Das stirnseitig offene Zylinderteil 5 ist bezüglich der Radachse 1 außen durch einen Gehäusedeckel 11 und innen durch einen Druckring 12 verschlossen.

Zum Niederspannen des Radsatzes bei seiner Bearbeitung durch eine Bearbeitungsmaschine, etwa zur Reprofilierung des Radreifenprofils des Schienenrades 2, weist der Druckring 12 erfindungsgemäß eine nach unten hervorstehende Spannlasche 13 auf. Die Spannlasche 13 dient als Spannstelle zum Angreifen von Spannmitteln der Bearbeitungsmaschine, etwa von Spannarmen einer Spezialdrehmaschine, und ist als ein am äußeren Umfang des Druckringes 12 radial hervorstehender Materialüberstand mit einem Durchgangsloch 14 gebildet. Am äußeren Umfang des Druckringes 12 kann auch eine weitere Spannlasche 13 angeordnet sein, die der anderen Spannlasche 13 diametral gegenüberliegt. Der Druckring 12 weist eine ringförmige Schulter auf, die in einer ringförmigen Nut des Lagergehäuses 4 sitzt. Über den Sitz der Schulter in der Nut sind Spannkräfte vom Druckring 12 auf das Lagergehäuse 4 übertragbar, ohne dass Befestigungsschrauben 15 zur Befestigung des Druckringes 12 am Lagergehäuse 4 auf Scherung belastet werden. Durch Integration der Spannstelle im Druckring 12 wird ein Radsatz bereitgestellt, der kostengünstig herstellbar und gewichtsoptimiert ist.

## Patentansprüche

1. Radsatz für ein Schienenfahrzeug, insbesondere für eine Lokomotive, mit zwei Schienenrädern (2), die über eine in zwei Radsatzlagern (3) gelagerte Radachse (1) verbunden sind, wobei jedes Radsatzlager (3) ein gegossenes Lagergehäuse (4) aufweist, welches durch einen äußeren Gehäusedeckel (11) und einen inneren Druckring (12) verschlossen ist und eine Spannstelle zum Angreifen von Spannmitteln einer Bearbeitungsmaschine zur Bearbeitung des Radsatzes aufweist, **dadurch gekennzeichnet, dass** die Spannstelle im Druckring (12) integriert ist.

2. Radsatz nach Anspruch 1, wobei die Spannstelle durch wenigstens eine an einem äußeren Umfang des Druckringes (12) radial hervorstehende Spannlasche (13) gebildet ist.

3. Radsatz nach Anspruch 2, wobei die Spannstelle durch zwei am äußeren Umfang des Druckringes (12) radial hervorstehende Spannlaschen (13) gebildet ist, die diametral gegenüber liegend angeordnet sind.

4. Radsatz nach Anspruch 2 oder 3, wobei eine Spannlasche (13) mindestens ein Durchgangsloch (14) zum Angreifen der Spannmittel aufweist.

5. Radsatz nach einem der Ansprüche 1 bis 4, wobei der Druckring (12) eine ringförmige Schulter aufweist, die in einer ringförmigen Nut des Lagergehäuses (4) sitzt, wobei über den Sitz der Schulter in der Nut Spannkräfte vom Druckring (12) auf das Lagergehäuse (4) übertragbar sind.

## Claims

1. Wheelset for a rail vehicle, in particular for a locomotive, having two track wheels (2) which are connected via a wheel axle (1) mounted in two wheelset bearings (3), wherein each wheelset bearing (3) has a cast bearing housing (4) which is closed by an outer housing cover (11) and an inner pressure ring (12), and a clamping position for engaging tensioning means of a machine tool for machining the wheelset, **characterised in that** the clamping position is integrated in the pressure ring (12).

2. Wheelset according to claim 1, wherein the clamping position is formed by at least one clamping strap (13) radially projecting on an outer circumference of the pressure ring (12).

3. Wheelset according to claim 2, wherein the clamping position is formed by two clamping straps (13) radially projecting on the outer circumference of the pressure ring (12), arranged to lie diametrically opposite.

4. Wheelset according to claim 2 or 3, wherein a clamping strap (13) has at least one through-hole (14) for engaging the tensioning means.

5. Wheelset according to one of claims 1 to 4, wherein the pressure ring (12) has an annular collar which sits in an annular groove of the bearing housing (4), wherein clamping forces can be transferred via the seat of the collar in the groove from the pressure ring (12) to the bearing housing (4).

## Revendications

1. Essieu pour un véhicule ferroviaire, notamment pour une locomotive, comprenant deux roues (2) de rail, qui sont reliées par un axe (1) de roue monté dans deux paliers (3) d'essieu, chaque palier (3) d'essieu ayant une boîte (4) de palier coulée, qui est fermée par un couvercle (11) extérieur de boîte et par un cône (12) intérieur de serrage et qui a un point de blocage pour l'attaque de moyens de blocage d'une machine d'usinage pour l'usinage de l'essieu, **caractérisé en ce que** le point de blocage est intégré au cône (12) de serrage.

2. Essieu suivant la revendication 1, dans lequel le point de blocage est formé par au moins une éclisse (13) de blocage en saillie radialement sur le pourtour extérieur du cône (12) de serrage.

3. Essieu suivant la revendication 2, dans lequel le point de blocage est formé par deux éclisses (13) de blocage en saillie radialement sur le pourtour extérieur du cône (12) de serrage, qui sont disposées de manière diamétralement opposée.

4. Essieu suivant la revendication 2 ou 3, dans lequel une éclisse (13) de blocage a au moins un trou (14) traversant pour l'attaque des moyens de blocage.

5. Essieu suivant l'une des revendications 1 à 4, dans lequel le cône (12) de serrage a un épaulement annulaire, qui s'assoit dans une rainure annulaire de la boîte (4) de palier, dans lequel, par l'assise de l'épaulement dans la rainure, des forces de blocage du cône (12) de serrage peuvent être transmises à la boîte (4) de palier.
